# EUROPÄISCHE PATENTSCHRIFT

(11) **EP 3 473 401 B1**
(45) Veröffentlichungstag und Bekanntmachung des Hinweises auf die Patenterteilung: **07.06.2023**
(21) Anmeldenummer: 18199779.2
(22) Anmeldetag: 11.10.2018
(51) Int. Cl.: B29C 45/14, B29C 45/16, B29K 101/10, B29K 101/12, B29K 705/00

(54) **VERFAHREN ZUM HERSTELLEN EINES VERBUNDBAUTEILS UND VERBUNDBAUTEIL**
COMPOUND COMPONENT AND METHOD FOR MANUFACTURING SAME
PROCÉDÉ DE FABRICATION D'UN COMPOSANT COMPOSITE ET COMPOSANT COMPOSITE

(30) Priorität: 18.10.2017 DE 102017218558
(43) Veröffentlichungstag der Anmeldung: 24.04.2019
(73) Patentinhaber: Robert Bosch GmbH, 70442 Stuttgart (DE)
(72) Erfinder: Schuett, Klaus-Volker, 73249 Wernau (DE)

(56) Entgegenhaltungen:
- EP-A2- 2 211 396
- WO-A1-2006/091532
- DE-A1- 10 361 096
- DE-A1-102009 016 177
- DE-A1-102012 207 359
- DE-A1-102015 222 310
- US-A1- 2015 092 360
- US-A1- 2017 047 263

## Beschreibung

### Stand der Technik

Die Erfindung betrifft ein Verfahren zum Herstellen eines Verbundbauteils nach dem Oberbegriff des Anspruchs 1. Ferner betrifft die Erfindung ein Verbundbauteil, das nach einem erfindungsgemäßen Verfahren hergestellt ist.

Aus der Praxis ist bereits ein gattungsgemäßes Verfahren zum Herstellen eines Verbundbauteils bekannt, bei dem an eine metallische Oberfläche eines ersten Bauteils ein Thermoplast eines zumindest bereichsweise aus Kunststoff bestehenden zweiten Bauteils angespritzt wird, wobei die beiden Bauteile nach dem Erstarren des Thermoplasts fest miteinander verbunden sind, siehe z.B.

DE 103 61 096 A1. Das zweite Bauteil kann dabei beispielsweise ein Gehäuse sein, in dem eine elektronische Schaltung auf einem Schaltungsträger angeordnet ist, wobei das Gehäuse vor dem Eintritt von Feuchtigkeit geschützt werden muss. Dadurch, dass die Materialien der beiden Bauteile verschiedene Wärmeausdehnungskoeffizienten aufweisen, kann es insbesondere bei Temperaturwechselbeanspruchungen zu Rissbildungen in dem Thermoplast des zweiten Bauteils kommen. Im oben angesprochenen Fall, bei dem das zweite Bauteil ein Gehäuse ist, das eine elektronische Schaltung vor der Einwirkung schädlicher Medien schützt, ist es daher nicht ausgeschlossen, dass schädliche Medien in Wirkverbindung mit der elektronischen Schaltung gelangen und dadurch diese schädigen oder vorschädigen kann.

### Offenbarung der Erfindung

Das erfindungsgemäße Verfahren zum Herstellen eines Verbundbauteils mit den Merkmalen des Anspruchs 1 hat den Vorteil, dass insbesondere Rissbildungen im Bereich des Thermoplasts des zweiten Bauteils vermieden werden können. Dies wird erfindungsgemäß dadurch ermöglicht, dass im Bereich der Verbindung zwischen dem Metall des ersten Bauteils und dem Thermoplast des zweiten Bauteils zwischen den beiden Bauteilen ein weiteres, drittes Bauteil angeordnet wird. Dieses dritte Bauteil wirkt somit als Puffer bzw. Zwischenelement zwischen den beiden ersten Bauteilen, derart, dass trotz unterschiedlicher Wärmeausdehnungskoeffizienten der beiden ersten Bauteile in dem aus Kunststoff bestehenden Bauteil im Bereich der Verbindung zum Metall des ersten Bauteils zur Rissbildung führende Spannungen zumindest reduziert werden. Dabei ist das dritte Bauteil sowohl mit dem ersten Bauteil, als auch mit dem zweiten Bauteil auf einander abgewandten Seiten des dritten Bauteils verbunden.

Das dritte Bauteil besteht aus einem Duroplast. Zur Sicherstellung der gewünschten Funktionalität des dritten Bauteils als Zwischenelement zwischen den beiden ersten Bauteilen zur Vermeidung von Spannungsrissen in dem zweiten Bauteil ist es darüber hinaus bei der Verwendung von Duroplast vorgesehen, dass dieses derart ausgewählt wird, dass es einen Wärmeausdehnungskoeffizienten aufweist, der zwischen den Wärmeausdehnungskoeffizienten des ersten und des zweiten Bauteils liegt.

Duroplast hat den Vorteil, dass es sich einerseits besonders einfach und sicher mit dem ersten Bauteil verbinden lässt, und andererseits eine geeignete Oberfläche ausbildet, um als Anbindungsfläche für den Kunststoff (Thermoplast) des zweiten Bauteils zu dienen.

Eine bevorzugte Variante des Verfahrens sieht vor, dass das dritte Bauteil mit dem ersten Bauteil verbunden wird und anschließend der Thermoplast des zweiten Bauteils an die dem ersten Bauteil abgewandte Seite des dritten Bauteils angespritzt wird. Es wird somit in einem Vormontageschritt das dritte Bauteil mit dem ersten Bauteil verbunden und die so gebildete Baueinheit in ein entsprechendes Spritzgusswerkzeug eingesetzt, in das anschließend das Thermoplast zur Ausbildung des zweiten Bauteils eingebracht wird.

In Weiterbildung des zuletzt genannten Verfahrens ist es vorgesehen, dass die Verbindung zwischen dem ersten und dem dritten Bauteil durch Beschichtung oder Verklebung erfolgt. Beide Varianten stellen eine sichere Verbindung zwischen dem ersten und dritten Bauteil sicher, sodass beim Anspritzen des Thermoplasts des zweiten Bauteils die Position zwischen dem ersten und dritten Bauteil unverändert aufrechterhalten bleibt.

Insbesondere kann es vorgesehen sein, dass das dritte Bauteil aus einer vorvernetzten Epoxidfolie besteht. Dadurch lässt sich ein einfaches Handling des dritten Bauteils erzielen.

Bei der Verwendung eines Duroplasts als Material für das dritte Bauteil ist es darüber hinaus in vorteilhafter Ausgestaltung des Verfahrens vorgesehen, dass zwischen dem Thermoplast und dem Duroplast eine chemische Vernetzung während des Anspritzens des Thermoplasts an das Duroplast stattfindet, und dass die Vernetzung zum Zeitpunkt einer Entformung des Verbundbauteils aus einem Spritzgusswerkzeug abgeschlossen ist. Dadurch kann ein derartiges Verbundbauteil unmittelbar nach dem Entformen weiteren Bearbeitungsschritten unterzogen werden, ohne dass die Gefahr besteht, dass die einzelnen Bauteile des Verbundbauteils sich voneinander lösen.

Weiterhin kann es vorgesehen sein, dass das Verbundbauteil nach dem Entformen aus einem Spritzgusswerkzeug einer thermischen Nachbehandlung unterzogen wird. Dies kann insbesondere dann sinnvoll sein, wenn die Vernetzung bzw. Verbindung zwischen dem zweiten und dem dritten Bauteil zum Zeitpunkt des Entformens des Verbundbauteils aus dem Spritzgusswerkzeug noch nicht vollständig abgeschlossen ist.

Die Erfindung umfasst auch ein Verbundbauteil, das nach einem soweit beschriebenen erfindungsgemäßen Verfahren hergestellt ist. Dabei zeichnet sich das Verbundbauteil dadurch aus, dass das zweite Bauteil ein Gehäusebauteil ist. insbesondere kann das Gehäusebauteil Bestandteil eines eine elektronische Schaltung aufweisenden Steuergeräts sein. Durch die erfindungsgemäße Ausgestaltung des Verbundbauteils mit dem dritten Bauteil zwischen dem ersten Bauteil und dem zweiten Bauteil ist dabei sichergestellt, dass Spannungsrisse in dem Gehäusebauteil vermieden werden, sodass der Zutritt von Feuchtigkeit oder ähnlichen schädlichen Medien zu dem Bereich der elektronischen Schaltung sicher unterbunden bzw. vermieden werden kann.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilbereich eines Verbundbauteils gemäß dem Stand der Technik im Schnitt und
- Fig. 2: das Verbundbauteil gemäß Fig. 1 unter Verwendung eines dritten Bauteils, wobei das Verbundbauteil auf erfindungsgemäße Art und Weise hergestellt wurde.

Gleiche Elemente bzw. Elemente mit gleicher Funktion sind in den Figuren mit den gleichen Bezugsziffern versehen.

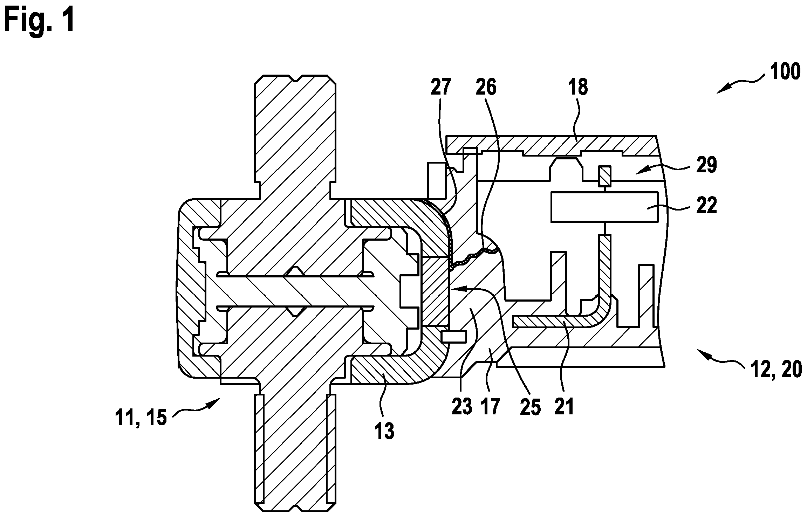

In der Fig. 1 ist ein Verbundbauteil 100 gemäß dem Stand der Technik dargestellt. Das Verbundbauteil 100 besteht aus einem ersten Bauteil 11, das zumindest teilweise aus Metall besteht, und einem mit dem ersten Bauteil 11 verbundenen zweiten Bauteil 12. Im dargestellten Ausführungsbeispiel weist das erste Bauteil 11 einen im Querschnitt C-förmigen Bügel 13 aus Kupfer aus, wobei der Bügel 13 Bestandteil eines als ersten Bauteil 11 ausgebildeten Shunts 15 ist.

Das zweite Bauteil 12 ist im dargestellten Ausführungsbeispiel als Gehäusebauteil 17 eines Gehäuses 20 ausgebildet, das mittels eines Gehäusedeckels 18 verschließbar ist. Innerhalb des Gehäuses 20 sind beispielhaft Stanzbauteile 21 angeordnet, die der elektrischen Kontaktierung eines als Leiterplatte 22 ausgebildeten Schaltungsträgers dienen. Auf der Leiterplatte 22 ist in an sich bekannte Art und Weise eine nicht dargestellte elektronische Schaltung angeordnet.

Das zweite Bauteil 12 besteht aus einem Thermoplast, beispielsweise PBT (Polybutylenterephthalat), wobei die Verbindung zwischen dem ersten Bauteil 11 und dem zweiten Bauteil 12 durch Anspritzen des Materials bzw. Thermoplasts des zweiter Bauteils 12 an das erste Bauteil 11 erfolgt. Im dargestellten Ausführungsbeispiel umgibt das Thermoplast des zweiten Bauteils 12 das erste Bauteil 11 an mehreren Stellen, wobei zwischen dem Bügel 13 und einer Wand 23 des Gehäuses 20 ein Verbindungsbereich 25 ausgebildet ist. In diesem Verbindungsbereich 25 ist das Thermoplast des zweiten Bauteils 12 unmittelbar an die metallische Oberfläche des ersten Bauteils 11 angespritzt.

Aufgrund unterschiedlicher Wärmeausdehnungskoeffizienten der Materialen der beiden Bauteile 11, 12 kann es insbesondere bei Temperaturwechselbeanspruchungen zu Rissen 26 in dem Bereich der Wand 23 des zweiten Bauteils 12 kommen. Auch kann sich ein Spalt 27 im Verbindungsbereich 25 ausbilden, der bis zum Riss 26 reicht. Dadurch kann es zu einem Eindringen von Feuchtigkeit in den Innenraum 29 des Gehäuses 20 kommen.

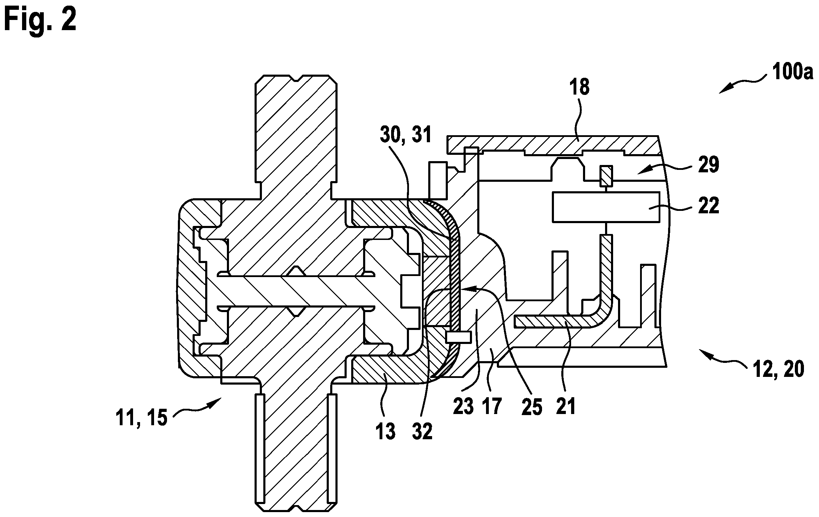

Das in der Fig. 2 bereichsweise dargestellte erfindungsgemäße Verbundbauteil 100a unterscheidet sich von dem Verbundbauteil 100 gemäß der Fig. 1 dadurch, dass zwischen dem ersten Bauteil 11 und dem zweiten Bauteil 12 ein drittes Bauteil 30 angeordnet ist. Das dritte Bauteil 30 besteht aus einem Duroplast und weist vorzugsweise einen Wärmeausdehnungskoeffizienten auf, der zwischen den Wärmeausdehnungskoeffizienten des Materials des ersten Bauteils 11 und des zweiten Bauteils 12 liegt.

Das dritte Bauteil 30 kann beispielsweise aus einer vorvernetzten Epoxidfolie 31 bestehen, die mit dem ersten Bauteil 11 an einer Verbindungsstelle 32 vorab auf die entsprechende metallische Oberfläche des ersten Bauteils 11 aufgeklebt wurde. Anschließend wurde der aus dem ersten Bauteil 11 und dem dritten Bauteil 30 ausgebildete Verbund in ein nicht dargestelltes Spritzgusswerkzeug eingelegt, in das das verflüssigte Thermoplast des zweiten Bauteils 12 eingespritzt wurde, um sich zumindest auch im Bereich des dritten Bauteils 30 mit dem dritten Bauteil 30, und somit auch mit dem ersten Bauteil 11 zu verbinden.

Vorzugsweise ist es vorgesehen, dass durch das Anspritzen des Thermoplasts des zweiten Bauteils 12 mit entsprechend aufeinander abgestimmten Spritzgussparametern (Druck, Zeit, Temperatur) und den entsprechenden Härtungseigenschaften des Duroplasts die chemische Vernetzung des Duroplasts des dritten Bauteils 30 mit dem Thermoplast des zweiten Bauteils 12 während des Anspritzens initiiert wird. Idealerweise sollte die angesprochene Vernetzung beim bzw. unmittelbar nach dem Entformen des Verbundbauteils 100a abgeschlossen sein. Gegebenenfalls kann anschließend jedoch ein thermisches Nachhärten (z.B. in einem Wärmeofen) stattfinden. Während der Vernetzung des Duroplasts des dritten Bauteils 30 mit dem Thermoplast des zweiten Bauteils 12 entsteht durch starken Haftungsaufbau ein inniger, stabiler Verbund, der eine Ablösung bzw. Delamination vom ersten Bauteil 11 verhindert.

Das soweit beschriebene Verbundbauteil 100a kann in vielfältiger Art und Weise abgewandelt bzw. modifiziert werden, ohne vom Umfang der in den beigefügten Ansprüchen definierten Erfindung abzuweichen.

## Patentansprüche

1. Verfahren zum Herstellen eines Verbundbauteils (100; 100a), bei dem ein zumindest bereichsweise aus Metall bestehendes erstes Bauteil (11) mit einem aus einem Thermoplast bestehenden zweiten Bauteil (12) verbunden wird, wobei das zweite Bauteil (12) durch einen Spritzvorgang von verflüssigtem Thermoplast und anschließendem Erstarren des Thermoplasts gebildet wird, und wobei die beiden Bauteile (11, 12) in wenigstens einem Verbindungsbereich (25) zumindest mittelbar miteinander verbunden werden,
**dadurch gekennzeichnet,**
**dass** im Verbindungsbereich (25) zwischen den beiden Bauteilen (11, 12) ein drittes Bauteil (30) angeordnet wird, derart, dass das dritte Bauteil (30) sowohl mit dem ersten Bauteil (11) als auch mit dem zweiten Bauteil (12) aufeinander abgewandten Seiten des dritten Bauteils (30) verbunden ist, wobei das dritte Bauteil (30) aus einem Duroplast besteht, und wobei das Duroplast des dritten Bauteils (30) einen Wärmeausdehnungskoeffizient aufweist, der zwischen den Wärmeausdehnungskoeffizienten des ersten Bauteils (11) und des zweiten Bauteils (12) liegt.

2. Verfahren nach Anspruch 1 ,
**dadurch gekennzeichnet,**
**dass** das dritte Bauteil (30) mit dem ersten Bauteil (11) verbunden wird und anschließend der Thermoplast des zweiten Bauteils (12) an die dem ersten Bauteil (11) abgewandte Seite des dritten Bauteils (30) angespritzt wird.

3. Verfahren nach Anspruch 2,
**dadurch gekennzeichnet,**
**dass** die Verbindung zwischen dem ersten Bauteil (11) und dem dritten Bauteil (30) durch Beschichtung oder Verklebung erfolgt.

4. Verfahren nach Anspruch 2 oder 3,
**dadurch gekennzeichnet,**
**dass** als drittes Bauteil (30) eine vorvernetzte Epoxidfolie (31) verwendet wird.

5. Verfahren nach einem der Ansprüche 2 bis 4,
**dadurch gekennzeichnet,**
**dass** zwischen dem Thermoplast des zweiten Bauteils (12) und dem Duroplast des dritten Bauteils (30) eine chemische Vernetzung während des Anspritzens des Thermoplasts an das Duroplast stattfindet, und dass die Vernetzung zum Zeitpunkt einer Entformung des Verbundbauteils (100a) aus einem Spritzgusswerkzeug abgeschlossen ist.

6. Verfahren nach einem der Ansprüche 1 bis 5,
**dadurch gekennzeichnet,**
**dass** das Verbundbauteil (100a) nach dem Entformen aus einem Spritzgusswerkzeug einer thermischen Nachbehandlung unterzogen wird.

7. Verbundbauteil (100a), das nach einem Verfahren nach einem der Ansprüche 1 bis 6 ausgebildet ist,
**dadurch gekennzeichnet,**
**dass** das zweite Bauteil (12) ein Gehäusebauteil (17) ist.

8. Verbundbauteil nach Anspruch 7,
**dadurch gekennzeichnet,**
**dass** das Gehäusebauteil (17) einen eine elektronische Schaltung aufweisenden Schaltungsträger (22) eines Steuergeräts umgibt.

## Claims

1. Method for producing a composite component (100; 100a), in which a first component (11) at least regionally consisting of metal is connected to a second component (12) consisting of a thermoplastic, wherein the second component (12) is formed by injection-moulding of liquefied thermoplastic and subsequent solidification of the thermoplastic, and wherein the two components (11, 12) are at least indirectly connected to one another in at least one connecting region (25),
**characterized**
**in that** a third component (30) is arranged in the connecting region (25) between the two components (11, 12) in such a way that the third component (30) is connected to both the first component (11) and the second component (12) on sides of the third component (30) that face away from one another, wherein the third component (30) consists of a thermoset, and wherein the thermoset of the third component (30) has a coefficient of thermal expansion which is between the coefficients of thermal expansion of the first component (11) and the second component (12).

2. Method according to Claim 1,
**characterized**
**in that** the third component (30) is connected to the first component (11), and the thermoplastic of the second component (12) is subsequently injection-moulded onto that side of the third component (30) which faces away from the first component (11).

3. Method according to Claim 2,
**characterized**
**in that** the connection between the first component (11) and the third component (30) is realized by coating or adhesive bonding.

4. Method according to Claim 2 or 3,
**characterized**
**in that** a pre-crosslinked epoxy film (31) is used as third component (30).

5. Method according to one of Claims 2 to 4,
**characterized**
**in that** chemical crosslinking takes place between the thermoplastic of the second component (12) and the thermoset of the third component (30) during the injection-moulding of the thermoplastic onto the thermoset, and in that the crosslinking is complete at the time when the composite component (100a) is demoulded from an injection-moulding tool.

6. Method according to one of Claims 1 to 5,
**characterized**
**in that**, after being demoulded from an injection-moulding tool, the composite component (100a) undergoes thermal post-treatment.

7. Composite component (100a) formed according to a method according to one of Claims 1 to 6,
**characterized**
**in that** the second component (12) is a housing component (17).

8. Composite component according to Claim 7,
**characterized**
**in that** the housing component (17) surrounds a circuit carrier (22), having an electronic circuit, of a control unit.

## Revendications

1. Procédé de fabrication d'un composant composite (100 ; 100a), dans lequel un premier composant (11) constitué au moins par zones de métal est relié à un deuxième composant (12) constitué d'un thermoplastique, le deuxième composant (12) étant formé par une opération d'injection de thermoplastique fluidifié et une solidification ultérieure du thermoplastique, et les deux composants (11, 12) étant reliés au moins indirectement entre eux dans au moins une zone de liaison (25),
**caractérisé en ce que**
un troisième composant (30) est agencé dans la zone de liaison (25) entre les deux composants (11, 12), de telle sorte que le troisième composant (30) est relié à la fois au premier composant (11) et au deuxième composant (12) sur des côtés détournés l'un de l'autre du troisième composant (30), le troisième élément (30) étant constitué d'un thermodurcissable, et le thermodurcissable du troisième composant (30) présentant un coefficient de dilatation thermique qui est compris entre les coefficients de dilatation thermique du premier composant (11) et du deuxième composant (12).

2. Procédé selon la revendication 1, **caractérisé en ce que** le troisième composant (30) est relié au premier composant (11) et le thermoplastique du deuxième composant (12) est ensuite injecté sur le côté du troisième composant (30) détourné du premier composant (11) .

3. Procédé selon la revendication 2, **caractérisé en ce que** la liaison entre le premier composant (11) et le troisième composant (30) est réalisée par revêtement ou par collage.

4. Procédé selon la revendication 2 ou 3, **caractérisé en ce qu'**un film époxy préréticulé (31) est utilisé en tant que troisième composant (30).

5. Procédé selon l'une quelconque des revendications 2 à 4, **caractérisé en ce qu'**une réticulation chimique a lieu entre le thermoplastique du deuxième composant (12) et le thermodurcissable du troisième composant (30) pendant l'injection du thermoplastique sur le thermodurcissable, et **en ce que** la réticulation est terminée au moment du démoulage du composant composite (100a) d'un outil de moulage par injection.

6. Procédé selon l'une quelconque des revendications 1 à 5, **caractérisé en ce que** le composant composite (100a) est soumis à un post-traitement thermique après le démoulage d'un outil de moulage par injection.

7. Composant composite (100a) formé par un procédé selon l'une quelconque des revendications 1 à 6, **caractérisé en ce que** le deuxième composant (12) est un composant de boîtier (17).

8. Composant composite selon la revendication 7, **caractérisé en ce que** le composant boîtier (17) entoure un support de circuit (22) d'un appareil de commande présentant un circuit électronique.
